# EUROPÄISCHE PATENTSCHRIFT

(11) **EP 3 283 320 B1**
(45) Veröffentlichungstag und Bekanntmachung des Hinweises auf die Patenterteilung: **30.01.2019**
(21) Anmeldenummer: 16710917.2
(22) Anmeldetag: 09.03.2016
(51) Int. Cl.: B60K 37/06

(54) **VERFAHREN UND VORRICHTUNG ZUM ÜBERWACHEN EINES ANZEIGENINHALTS**
METHOD AND DEVICE FOR MONITORING A DISPLAY CONTENT
PROCÉDÉ ET DISPOSITIF POUR SURVEILLER UN CONTENU D'AFFICHAGE

(30) Priorität: 17.04.2015 DE 102015004914
(43) Veröffentlichungstag der Anmeldung: 21.02.2018
(73) Patentinhaber: Daimler AG, 70327 Stuttgart (DE)
(72) Erfinder: DROYSEN VON HAMILTON, Cora, 70191 Stuttgart (DE); SCHNEIDER, Steffen, 71069 Sindelfingen (DE); SMUDA, Peer, 71063 Sindelfingen (DE)
(74) Vertreter: JENSEN & SON
(86) Internationale Anmeldenummer: PCT/EP2016/000420
(87) Internationale Veröffentlichungsnummer: WO 2016/165803

(56) Entgegenhaltungen:
- DE-A1-102012 019 508

## Beschreibung

Die Erfindung betrifft ein Verfahren und eine Vorrichtung zum Überwachen eines Anzeigeninhalts.

Für die Entwicklung von Kraftfahrzeugen, insbesondere für PKW, gilt seit 2011 die Sicherheitsnorm ISO 26262.

Aus dieser Sicherheitsnorm gehen bestimmte Anforderungen hervor, die es erforderlich machen, dass einige Warnleuchten und Anzeigen in Kombiinstrumenten "sicher" realisiert werden und mit einem Automotive Safety Integrity Level (ASIL) belegt werden.

Diese Anzeigen müssen nach einer garantierten Zeit für den Fahrer sichtbar sein, damit er geeignet reagieren kann. Bei Volldisplay-Kombiinstrumenten werden diese Anzeigen durch grafische Displayelemente realisiert.

Hierbei muss ein mögliches Auftreten von sicherheitskritischen Fehlern vermieden werden. Mögliche sicherheitskritische Hardware/Softwarefehler bei Volldisplaykombiinstrumenten sind:
1) Austauschen von Icons. Beispiel: statt der Parkleuchte wird ein Defekt der Bremse gezeigt.
2) Einfrieren des Displays. Der Fahrer kann nicht erkennen, dass die angezeigten Informationen nicht mehr aktuell sind.
3) Keine/zu späte Anzeige. Fahrer wird nicht rechtzeitig über den Fahrzeugzustand informiert.

Die Sicherheit der Anzeigen gemäß ISO 26262 wird dadurch erreicht, dass es einen Hardware/Softwarepfad gibt, der bei Empfang einer Aktivierungsanforderung per CAN-BUS die anzuzeigenden Icons lädt und an den vorbestimmten Displaypositionen zur Anzeige bringt. Ein zweiter Hardware/Softwarepfad wertet die Aktivierungsanforderung ebenfalls aus, aber überprüft über einen Prüfsummenvergleich, ob die angeforderte Anzeige auch wirklich innerhalb der vorgegebenen Zeit an der vorgesehenen Position sichtbar wird und sichtbar bleibt. Hierbei wird eine Prüfsumme aus der aktuellen Anzeige errechnet und mit einer bei der Entwicklung des Steuergerätes hinterlegten Prüfsumme verglichen.

Bei bisher bekannten Verfahren werden die Prüfsummen anhand von vordefinierten Bildbereichen ermittelt. Dabei wird über die Pixelfarben innerhalb des Bildbereichs eine Prüfsumme berechnet. Diese Prüfsumme wird eindeutig, wenn der Bildbereich ausreichend groß ist, sodass die Form und Farbe des Icons ein eindeutiges Pixelmuster ergibt.

Nachteilig an dieser Lösung ist, dass nicht nur das jeweilige Icon, sondern auch dessen Hintergrund mit in die Prüfsummenbildung einbezogen wird. Somit muss das Icon, sowie dessen Hintergrund vollkommen statisch realisiert sein, da sonst bei wechselnden Hintergründen oder Animationen der Prüfsummenvergleich fehlschlagen würde.

Diese Einschränkung ist für eine attraktive Gestaltung von Volldisplaykombiinstrumenten schwerwiegend, da sie unterschiedliche Farbwelten und Animationen teilweise unmöglich macht.

Demnach stellt sich die Aufgabe, sichere Anzeigen zu gewährleisten unter Vermeidung der oben genannten Einschränkungen.

Diese Aufgabe wird durch ein Verfahren zum Überwachen eines auf einer Anzeigeeinrichtung eines Fahrzeugs anzuzeigenden Anzeigeninhalts gelöst. Hierbei ist vorgesehen, dass der Anzeigeninhalt ein Bildsymbol und einen Hintergrund aufweist. Ein Überwachungsbereich wird durch Einfügen eines Verschlüsselungselements innerhalb des Bildsymbols und außerhalb des Hintergrunds in den anzuzeigenden Anzeigeinhalt aufweisenden Daten festgelegt. Die den anzuzeigenden Anzeigeinhalt aufweisenden Daten werden zu der Anzeigeeinrichtung übertragen: Es wird unter Verwendung des Verschlüsselungselements in den den anzuzeigenden Anzeigeinhalt aufweisenden Daten, die zu der Anzeigeeinrichtung übertragen worden sind, bestimmt, ob das Bildsymbol fehlerfrei angezeigt wird oder nicht.

Ferner wird die Aufgabe der Erfindung durch eine Vorrichtung gelöst, die Einrichtungen aufweist, die zum Ausführen des Verfahrens ausgelegt sind.

Weitere Vorteilsangaben ergeben sich aus den Merkmalen der Unteransprüche.

Es wird demnach eine Überwachung von sicherheitskritischen Displayinhalten mittels unsichtbarer Verschlüsselungselemente, beispielsweise in Form von Wasserzeichen vorgeschlagen.

Hierbei kann mit Vorteil der Sicherheitsstandard nach ISO 26262 eingehalten werden.

Der Prüfbereich oder Überwachungsbereich wird auf einen sehr kleinen Bereich reduziert, beispielsweise auf 4 x 4 Pixel, so dass er vollständig in einem sicherheitskritischen Bildsymbol oder Displayelement liegt. Da nun aber keine eindeutige Unterscheidung der Displayelemente mehr aufgrund ihrer Formkontur möglich wäre, hinterlegt man mindestens ein unsichtbares und eindeutiges Verschlüsselungselement in Form eines Wasserzeichens auf dem zu überwachenden Displayelement.

Somit können Displayinhalte ohne Einschränkungen bei der Gestaltung von Hintergründen bzw. Animationen auf ihre Sichtbarkeit und korrekte Darstellung überwacht werden. Dies ist besonders vorteilhaft bei der Anwendung von Kombianzeigegeräten im Fahrzeugbereich. Demnach kann das erfindungsgemäße Anzeigeninstrument, beispielsweise in der Ausgestaltung eines Kombiinstrumentes, insbesondere in einem Volldisplay-Kombiinstrument, in einem Fahrzeug installiert sein.

Die Sichtbarkeit der Displayelemente kann demnach ohne Wechselwirkungen mit dem Hintergrund überprüft werden, so dass eine maximale Gestaltungsfreiheit ermöglicht wird. Es können also sehr viel attraktivere und wechselnde Displaydesigns erstellt werden und gleichzeitig sicherheitskritische Anwendungen und Warnleuchten in Anzeigeninstrumenten realisiert werden.

Weitere Vorteile, Merkmale und Einzelheiten der Erfindung ergeben sich aus der nachfolgenden Beschreibung eines bevorzugten Ausführungsbeispiels sowie anhand der Zeichnung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Das Dokument DE 10 2012 019508 A offenbart den Oberbegriff des Anspruchs 1.

Dabei zeigen:
- Fig. 1: Überwachungsbereiche zur Prüfsummenbildung nach dem Stand der Technik; und
- Fig. 2: beispielhafte Ausführungsform von unsichtbar aufgeprägten Wasserzeichen innerhalb der Überwachungsbereiche gemäß der Erfindung

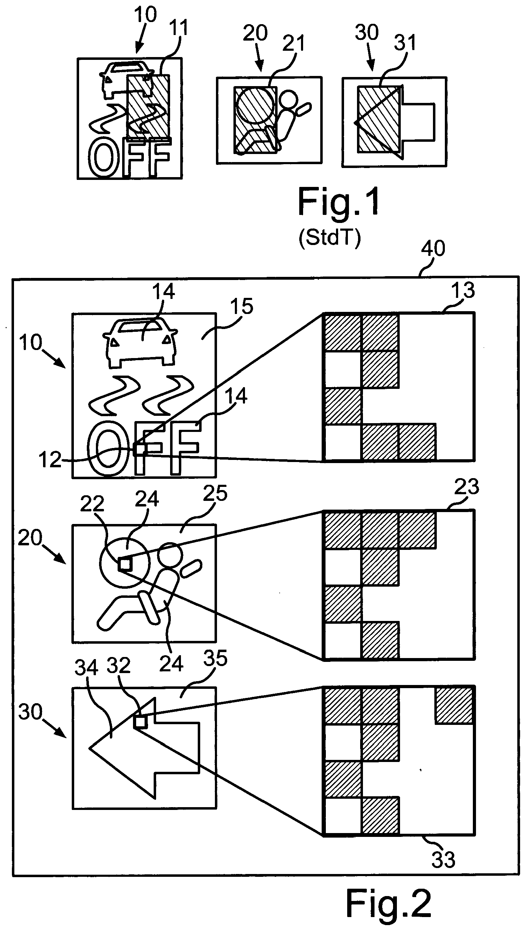

Fig. 1 zeigt drei verschiedene Anzeigeinhalte oder Icons 10, 20, 30, die jeweils einen Überwachungsbereich 11, 21, 31 zur Prüfsummenbildung aufweisen, in der Art wie dies aus dem Stand der Technik bekannt ist. Die Prüfsummen werden anhand der vordefinierten Überwachungsbereiche oder Bildbereiche 11, 21, 31 ermittelt. Dabei wird über die Pixelfarben innerhalb eines jeden Bildbereiches 11, 21, 31 eine Prüfsumme berechnet. Diese Prüfsumme wird eindeutig, wenn der jeweilige Bildbereich 11, 21, 31 ausreichend groß ist, so dass die Form und Farbe des jeweiligen Bildbereichs 11, 21, 31 ein eindeutiges Pixelmuster ergibt.

Fig. 2 zeigt ein Ausführungsbeispiel eines Anzeigeinstrumentes 40 zum Überwachen von drei Anzeigeninhalten 10, 20, 30. Die Anzeigeninhalte 10, 20, 30 weisen jeweils ein oder mehrere Bildsymbole 14, 24, 34 auf einem Hintergrund 15, 25, 35 auf. Der erste Anzeigeinhalt 10 zeigt mehrere Bildsymbole als eine Kombination mit einem Fahrzeug und einer Schleuderspur oberhalb des Begriffs "OFF". Der zweite Anzeigeninhalt 20 hat einen Hintergrund 25 und zeigt darauf eine angeschnallte Person mit einem kreisförmigen Symbol vor der Person als eine Kombination von Bildsymbolen 24. Der dritte Anzeigeninhalt 30 zeigt einen nach links gerichteten Pfeil als Bildsymbol 34 auf einem Hintergrund 35. Die jeweiligen Bildsymbole befinden sich vor einem Hintergrund, so dass ein Bildsymbol und ein Hintergrund, hier farbiges Rechteck, zusammen den Anzeigeninhalt bilden.

Um die Einschränkungen bei der Gestaltung der Hintergründe 15, 25, 35 zu lösen, werden die jeweiligen Überwachungsbereiche 12, 22, 32 im Vergleich zu den Überwachungsbereichen 11, 21, 31 der Fig. 1 so stark verkleinert, dass die Prüfsummenbildung ausschließlich innerhalb des zu überwachenden Bildsymbols 14, 24, 34 liegt, wie in Figur 2 dargestellt. Setzt sich ein Bildsymbol 14, 24, 34 aus mehreren Teilen zusammen, wie dies bei den Bildsymbolen 14 und 24 der Fall ist, so genügt die Verwendung eines Teils des Bildsymbols zur Festlegung des Überwachungsbereiches. Durch die Anwendung des erfindungsgemäßen Verfahrens können die Hintergründe 15, 25, 35 der Bildsymbole 10, 20, 30 nun beliebig verändert werden und haben keinen Einfluss mehr auf die Prüfsummenbildung.

Die starke Verkleinerung der Überwachungsbereiche 12, 22, 32 in Fig. 2 führt jedoch dazu, dass diese auf homogenen Farbflächen liegen und somit die Prüfsummen zwischen den unterschiedlichen Icons 10, 20, 30 nicht mehr eindeutig sein können. Dies würde eine eindeutige Überwachung auf die korrekten Anzeigeninhalte 10, 20, 30 verhindern und wäre nicht für ein Überwachungskonzept geeignet.

Daher werden zusätzlich zu den verkleinerten Überwachungsbereichen 12, 22, 32 Verschlüsselungselemente 13, 23, 33 in Form von Wasserzeichen verwendet. Mittels eindeutiger Wasserzeichen 13, 23, 33, die genau an den überwachten Bereichen 12, 22, 32 auf die Bildsymbolen 14, 24, 34 jeweils aufgeprägt werden, kann eine eindeutige Identifikation der sicherheitskritischen Anzeigeninhalte oder Displayelemente 10, 20, 30 realisiert werden. Die Wasserzeichen 13, 23, 33, wie beispielhaft in Fig. 2 dargestellt, werden über eine für den Menschen nicht wahrnehmbare Änderung der Pixelfarben realisiert.

Es ergeben sich hieraus die Vorteile, dass in Displays sicherheitskritische Anzeigen dargestellt werden können, ohne Einschränkungen bei der Gestaltung der nicht sicherheitskritischen Inhalte, wie beispielsweise der Hintergrundfarbe, hinnehmen zu müssen. Farbumschaltungen, Animationen und sonstige dynamische Veränderungen können realisiert werden, um dem Benutzer attraktive und trotzdem nach ISO 26262 sichere Anzeigen bereitzustellen.

## Patentansprüche

1. Verfahren zum Überwachen eines auf einer Anzeigeeinrichtung eines Fahrzeugs anzuzeigenden Anzeigeninhalts (10, 20, 30), der ein Bildsymbol (14, 24, 34) und einen Hintergrund (15, 25, 35) aufweist, **dadurch gekennzeichnet, dass** das Verfahren aufweist:
Festlegen eines Überwachungsbereiches (12, 22, 32) durch Einfügen eines Verschlüsselungselements (13, 23, 33) innerhalb des Bildsymbols (14, 24, 34) und außerhalb des Hintergrunds (15, 25, 35) in den anzuzeigenden Anzeigeinhalt (10, 20, 30) aufweisenden Daten;
Übertragen der den anzuzeigenden Anzeigeinhalt (10, 20, 30) aufweisenden Daten zu der Anzeigeeinrichtung; und
Bestimmen, ob das Bildsymbol (14, 24, 34) fehlerfrei angezeigt wird oder nicht, unter Verwendung des Verschlüsselungselements (13, 23, 33) in den den anzuzeigenden Anzeigeinhalt (10, 20, 30) aufweisenden Daten, die zu der Anzeigeeinrichtung übertragen worden sind.

2. Verfahren nach Anspruch 1,
**dadurch gekennzeichnet, dass**
das Bestimmen durch ein Vergleichen des Verschlüsselungselements (13, 23, 33) in den den anzuzeigenden Anzeigeinhalt (10, 20, 30) aufweisenden Daten vor dem Übertragen mit dem Verschlüsselungselement (13, 23, 33) in den den anzuzeigenden Anzeigeinhalt (10, 20, 30) aufweisenden Daten nach dem Übertragen durchgeführt wird.

3. Verfahren nach Anspruch 2,
**dadurch gekennzeichnet, dass**
das Vergleichen unter Verwendung einer Prüfsumme des Verschlüsselungselements (13, 23, 33) in den den anzuzeigenden Anzeigeinhalt (10, 20, 30) aufweisenden Daten vor dem Übertragen und einer Prüfsumme des Verschlüsselungselements (13, 23, 33) in den den anzuzeigenden Anzeigeinhalt (10, 20, 30) aufweisenden Daten nach dem Übertragen durchgeführt wird.

4. Verfahren nach einem der Ansprüche 1 bis 3,
**dadurch gekennzeichnet, dass**
die Anzeigeeinrichtung voll-digital ist.

5. Verfahren nach einem der Ansprüche 1 bis 4,
**dadurch gekennzeichnet, dass**
die Anzeigeeinrichtung ein Kombiinstrument ist.

6. Verfahren nach einem der Ansprüche 1 bis 5,
**dadurch gekennzeichnet, dass**
bei dem Verfahren der Sicherheitsstandard nach ISO 26262 eingehalten wird.

7. Verfahren nach einem der Ansprüche 1 bis 6,
**dadurch gekennzeichnet, dass**
der Überwachungsbereich (12, 22, 32) eine Größe von 4 x 4 Pixel aufweist.

8. Vorrichtung zum Überwachen eines auf einer Anzeigeeinrichtung eines Fahrzeugs anzuzeigenden Anzeigeninhalts (10, 20, 30), der ein Bildsymbol (14, 24, 34) und einen Hintergrund (15, 25, 35) aufweist, wobei die Vorrichtung Einrichtungen aufweist, die zum Ausführen des Verfahrens nach einem der Ansprüche 1 bis 7 ausgelegt sind.

## Claims

1. Method for monitoring a display content (10, 20, 30) to be displayed on a display device of a vehicle and having a pictogram (14, 24, 34) and a background (16, 25, 35),
**characterised in that** the method comprises:
the defining of a monitoring region (12, 22, 32) by inserting an encoding element (13, 23, 33) within the pictogram (14, 24, 34) and outside the background (16, 25, 35) into data containing the display content (10, 20, 30) to be displayed;
the transmission of the data containing the display content (10, 20, 30) to be displayed to the display device; and
the determination whether or not the pictogram (14, 24, 34) is displayed faultlessly, using the encoding element (13, 23, 33) in the data containing the display content (10, 20, 30) to be displayed, which have been transmitted to the display device.

2. Method according to claim 1,
**characterised in that**
the determination is carried out by comparing the encoding element (13, 23, 33) in the data containing the display content (10, 20, 30) to be displayed before transmission to the encoding element (13, 23, 33) in the data containing the display content (10, 20, 30) to be displayed after transmission.

3. Method according to claim 2,
**characterised in that**
the comparison is carried out by using a checksum of the encoding element (13, 23, 33) in the data containing the display content (10, 20, 30) to be displayed before transmission and a checksum of the encoding element (13, 23, 33) in the data containing the display content (10, 20, 30) to be displayed after transmission.

4. Method according to any of claims 1 to 3,
**characterised in that**
the display device is fully digital.

5. Method according to any of claims 1 to 4,
**characterised in that**
the display device is an instrument cluster.

6. Method according to any of claims 1 to 5,
**characterised in that**
the safety standard according to ISO 26262 is complied with in the method.

7. Method according to any of claims 1 to 6,
**characterised in that**
the monitoring region (12, 22, 32) has a size of 4 x 4 pixels.

8. Device for monitoring a display content (10, 20, 30) to be displayed on a display device of a vehicle and having a pictogram (14, 24, 34) and a background (16, 25, 35), the device comprising facilities designed for carrying out the method according to any of claims 1 to 7.

## Revendications

1. Procédé de surveillance d'un contenu d'affichage (10, 20, 30) à afficher sur un dispositif d'affichage d'un véhicule automobile, qui présente une icône (14, 24, 34) et un arrière-plan (15, 25, 35), **caractérisé en ce que** le procédé consiste à :
définir une zone de surveillance (12, 22, 32) par insertion d'un élément de chiffrage (12, 23, 33) à l'intérieur de l'icône (14, 24, 34) et à l'extérieur de l'arrière-plan (15, 25, 35) dans des données présentant le contenu d'affichage à afficher (10, 20, 30) ;
transmettre les données présentant le contenu d'affichage à afficher (10, 20, 30) au dispositif d'affichage ; et
déterminer si l'icône (14, 24, 34) s'affiche sans erreur ou non, à l'aide de l'élément de chiffrage (13, 23, 33) dans les données présentant le contenu d'affichage (1à, 20, 30) à afficher, qui ont été transmises au dispositif d'affichage.

2. Procédé selon la revendication 1, **caractérisé en ce que** la détermination s'effectue par une comparaison de l'élément de chiffrement (13, 23, 33) dans les données présentant le contenu d'affichage (10, 20, 30) à afficher avant la transmission avec l'élément de chiffrement (13, 23, 33) dans les données présentant le contenu d'affichage (10, 20, 30) à afficher après la transmission.

3. Procédé selon la revendication 2, **caractérisé en ce que** la comparaison s'effectue à l'aide d'un total de contrôle de l'élément de chiffrement (13, 23, 33) dans les données présentant le contenu d'affichage (10, 20, 30) à afficher avant la transmission et à l'aide d'un total de contrôle de l'élément de chiffrement (13, 23 ? 33) dans les données présentant le contenu d'affichage (10, 20, 30) à afficher après la transmission.

4. Procédé selon l'une quelconque des revendications 1 à 3, **caractérisé en ce que** le dispositif d'affichage est complètement numérique.

5. Procédé selon l'une quelconque des revendications 1 à 4, **caractérisé en ce que** le dispositif d'affichage est instrument combiné.

6. Procédé selon l'une quelconque des revendications 1 à 5, **caractérisé en ce que** selon le procédé, la norme de sécurité selon ISO 26262 est respectée.

7. Procédé selon l'une quelconque des revendications 1 à 6, **caractérisé en ce que** la zone de surveillance (12, 22, 32) présente une taille de pixel 4 x 4.

8. Procédé de surveillance d'un contenu d'affichage (10, 20, 30) à afficher sur un dispositif d'affichage d'un véhicule automobile, qui présente une icône (14, 24, 34) et un arrière-plan (15, 25, 35), le dispositif présente des appareils qui sont conçus pour exécuter le procédé selon l'une quelconque des revendications 1 à 7.
